(19)

Europäisches
Patentamt
European
Patent Office
Office européen
des brevets

(11)  **EP 2 690 138 A1**

(12)  **EUROPEAN PATENT APPLICATION**
published in accordance with Art. 153(4) EPC

(43) Date of publication:
  **29.01.2014 Bulletin 2014/05**

(51) Int Cl.:
  ***C08L 27/18*** (2006.01)   ***B29C 67/00*** (2006.01)
  ***C08J 9/26*** (2006.01)   ***C08J 9/40*** (2006.01)
  ***C08K 3/00*** (2006.01)   ***H02K 9/19*** (2006.01)

(21) Application number: **11861811.5**

(22) Date of filing: **20.10.2011**

(86) International application number:
  **PCT/JP2011/005891**

(87) International publication number:
  **WO 2012/127546 (27.09.2012 Gazette 2012/39)**

(84) Designated Contracting States:
  **AL AT BE BG CH CY CZ DE DK EE ES FI FR GB
  GR HR HU IE IS IT LI LT LU LV MC MK MT NL NO
  PL PT RO RS SE SI SK SM TR**

(30) Priority: **23.03.2011 JP 2011064841**

(71) Applicant: **Nitto Denko Corporation
  Osaka 567-8680 (JP)**

(72) Inventors:
  • **KITAGAWA, Daisuke
    Ibaraki-shi
    Osaka 567-8680 (JP)**

  • **TAKAYAMA, Yoshinari
    Ibaraki-shi
    Osaka 567-8680 (JP)**
  • **UOTA, Toshio
    Ibaraki-shi
    Osaka 567-8680 (JP)**

(74) Representative: **Intès, Didier Gérard André et al
  Cabinet Beau de Loménie
  158, rue de l'Université
  75340 Paris Cedex 07 (FR)**

(54)  **HEAT DISSIPATING MEMBER AND MANUFACTURING METHOD FOR SAME**

(57)   The present invention provides a heat dissipating member having excellent heat dissipation properties and suitable for use in an oil environment. The present invention is a heat dissipating member including: a porous base material containing a fluorine resin and a thermally-conductive filler; and an oil contained in pores of the porous base material. The fluorine resin contains polytetrafluoroethylene. The heat dissipating member can be produced, for example, by a method including the steps of: (1) stacking and rolling together a plurality of sheet-shaped formed bodies each containing a polytetrafluoroethylene-containing fluorine resin, a thermally-conductive filler, and a molding aid, so as to obtain a rolled laminated sheet; (2) removing the molding aid from the obtained rolled laminated sheet to obtain a porous base material; and (3) impregnating the obtained porous base material with an oil.

**Description**

TECHNICAL FIELD

The present invention relates to heat dissipating members, and particularly relates to a heat dissipating member suitable for use in an oil environment. The present invention also relates to a method for producing the heat dissipating member.

BACKGROUND ART

In resent years, hybrid automobiles and electric automobiles have been developed in view of environmental responsiveness. A motor is used for a drive system of such a vehicle, and increase in the output power of the motor is desired. When attempting to increase the output power of the motor, it is required to improve cooling capability in order to respond to increase in heat generation associated with improvement in the output power.

A motor for a vehicle is composed of a rotor, a stator, and a casing. An automatic transmission fluid (ATF) serving as a lubricating oil is enclosed in a lower portion of the motor. As an example of a method for improving the capability to cool such a motor, Non-Patent Literature 1 proposes a method in which an ATF for lubricating a motor bearing is fed between the stator and the casing to cool the motor.

CITATION LIST

Non-Patent Literature

Non-Patent Literature 1: "DENSO TECHNICAL REVIEW", Vol. 13, No. 1, 2008

SUMMARY OF INVENTION

Technical Problem

However, the cooling capability of the method described in Non-Patent Literature 1 is still insufficient. By contrast, a heat dissipating member usable in an oil environment such as in a vehicle motor and having excellent heat dissipation properties can be expected to function as effective means for improving the capability to cool the vehicle motor.

Therefore, the present invention aims to provide a heat dissipating member having excellent heat dissipation properties and suitable for use in an oil environment.

Solution to Problem

The present invention is a heat dissipating member including: a porous base material containing a fluorine resin and a thermally-conductive filler; and an oil contained in pores of the porous base material. In the heat dissipating member, the fluorine resin contains polytetrafluoroethylene.

Preferably, the fluorine resin further contains at least one selected from the group consisting of perfluoroalkoxy resins and tetrafluoroethylene-hexafluoropropylene copolymers.

Preferably, the heat dissipating member of the present invention contains the oil in an amount of 1% by mass or more. Preferably, the oil is at least one selected from the group consisting of automatic transmission fluids, engine oils, universal oils, gear oils, hydrostatic transmission oils, and silicone oils.

In a preferred embodiment of the heat dissipating member of the present invention, the thermally-conductive filler is at least one insulating filler selected from the group consisting of boron nitride, aluminum nitride, alumina, silicon nitride, and magnesium oxide. In another preferred embodiment of the heat dissipating member of the present invention, the thermally-conductive filler is at least one electrically-conductive filler selected from the group consisting of graphite, carbon black, carbon fibers, metal fibers, and metal particles.

Preferably, the heat dissipating member of the present invention is packaged in a pack with an oxygen barrier film when put into storage and when put on the market.

The present invention is also directed to a method for cooling a vehicle motor. The method is characterized by using the heat dissipating member.

The present invention is also directed to a method for producing a heat dissipating member. The method includes the steps of: (1) stacking and rolling together a plurality of sheet-shaped formed bodies each containing a polytetrafluoroethylene-containing fluorine resin, a thermally-conductive filler, and a molding aid, so as to obtain a rolled laminated sheet; (2) removing the molding aid from the obtained rolled laminated sheet to obtain a porous base material;

and (3) impregnating the obtained porous base material with an oil.

The production method of the present invention may further include a step (4) of subjecting the porous base material to pressure molding between the step (2) and the step (3).

Preferably, the step (3) is performed by immersing the porous base material in an oil after removing air from pores of the porous base material, and then by pressurizing the oil.

Advantageous Effects of Invention

According to the present invention, a heat dissipating member having excellent heat dissipation properties and suitable for use in an oil environment is provided. The heat dissipating member is thus extremely useful, for example, as a heat dissipating member for a vehicle motor.

BRIEF DESCRIPTION OF DRAWINGS

Fig. 1 is a schematic cross-sectional view for illustrating an impregnation process using a vacuum and high-pressure impregnation system.
Fig. 2 is a diagram showing a thermal characterization system used in Examples, where (a) is an elevation view, and (b) is a side view.

DESCRIPTION OF EMBODIMENTS

A heat dissipating member of the present invention includes: a porous base material containing a fluorine resin and a thermally-conductive filler; and an oil contained in pores of the porous base material.

High oil resistance is imparted to the heat dissipating member of the present invention by the use of the porous base material containing the fluorine resin.

The fluorine resin contains polytetrafluoroethylene (PTFE). Since the fluorine resin contains PTFE, it is easy to fabricate the porous base material having a high content of the thermally-conductive filler. The fluorine resin may contain a fluorine resin other than PTFE to the extent that the effect of the present invention is not impaired. Examples of the fluorine resin other than PFTE include fusible fluorine resins. When the fluorine resin contains a fusible fluorine resin, it is made easier to fabricate the porous base material having a high content of the thermally-conductive filler. For example, a material containing the fluorine resin and the thermally-conductive filler can easily be formed into a sheet. At least one selected from the group consisting of perffuoroalkoxy (PFA) resins and tetrafluoroethylene-hexafluoropropylene copolymers (FEP) is preferably used as the fusible fluorine resin. Although there are various PFA products and FEP products having different melting points, an appropriate product may be selected depending on the method for processing the product into the porous base material, and on the conditions for the processing.

With respect to the lower limit of the proportion of the fusible fluorine resin in the fluorine resin, the proportion of the fusible fluorine resin is preferably at least 5% by mass, and more preferably at least 10% by mass. With respect to the upper limit, the proportion of the fusible fluorine resin is at most 70% by mass, more preferably at most 50% by mass, and even more preferably at most 30% by mass.

Good thermally-conductive properties are imparted to the heat dissipating member of the present invention by a thermally-conductive filler. Here, the thermally-conductive filler means a filler having a thermal conductivity of 1 W/mK or more, preferably 100 W/mK or more. The type of the thermally-conductive filler may be selected as appropriate in accordance with the intended use of the heat dissipating member. For example, when it is desired to impart good insulating properties to the heat dissipating member, an insulating filler having a volume resistivity of $10^{14}\ \Omega \cdot$ cm or more may be used. At least one insulating filler selected from the group consisting of boron nitride, aluminum nitride, alumina, silicon nitride, and magnesium oxide, is suitably used. In a motor for a hybrid automobile or in an electric generator, there is a high-voltage region where a large transient current is generated. The heat dissipating member to which good insulating properties have been imparted by an insulating filler is advantageous for use in such a region.

On the other hand, when it is desired to impart good electrically-conductive properties to the heat dissipating member, an electrically-conductive filler having a volume resistivity of $10^6\ \Omega \cdot$ cm or less may be used. At least one electrically-conductive filler selected from the group consisting of graphite, carbon black, carbon fibers, metal fibers (e.g., aluminum fibers, copper fibers etc.), and metal particles (e.g., particles of gold, silver, copper, palladium, platinum etc.) is suitably used.

The shape of the thermally-conductive filler is not particularly limited, and spherical fillers or non-spherical fillers can be used. Platy fillers or flaky fillers are preferable, since anisotropic thermal conductivity can be imparted by performing rolling and thus aligning the fillers in an in-plane direction. Also, for similar reasons, the thermally-conductive filler itself preferably has anisotropic thermal conductivity. In addition, when it is attempted to increase the thermal conductivity in the thickness direction, any of thermally-conductive filler aggregates sold by various manufacturers may be used.

The thermally-conductive filler only needs to be supported in a fluorine resin matrix without falling off the fluorine resin matrix, and to be capable of imparting sufficient thermally-conductive properties to the resultant heat dissipating member. Accordingly, the particle diameter of the thermally-conductive filler is not particularly limited. For example, the particle diameter is preferably 0.2 to 500 $\mu$m, and more preferably 0.2 to 50 $\mu$m. The thermally-conductive filler preferably has a large particle diameter in order to increase the thermal conductivity. This is because, when equal contents of thermally-conductive fillers having different particle diameters are compared, the thermally-conductive filler having a larger particle diameter forms a smaller number of interfaces, and allows lower thermal resistance. Here, the particle diameter means a value measured by a laser diffraction/scattering-type particle diameter/particle size distribution measurement apparatus (e.g., "Microtrac" manufactured by NIKKISO CO., LTD.).

The content of the thermally-conductive filler is preferably 50 to 95% by mass, more preferably 70 to 90% by mass, and even more preferably 80 to 90% by mass, relative to the total mass of the porous base material. The content of the fluorine resin is preferably 5 to 50% by mass, more preferably 10 to 30% by mass, and even more preferably 10 to 20% by mass, relative to the total mass of the porous base material.

The porous base material may contain a component other than the fluorine resin and the thermally-conductive filler. Examples of such a component include other resins than fluorine resins. Examples of the other resins that can be used include commonly-used thermoplastic resins and thermosetting resins. The content of the component is preferably 10% by mass or less relative to the total mass of the porous base material.

In the base material used in the present invention, the thermally-conductive filler is dispersed in a fluorine resin matrix. The base material has a porous structure. There is no particular limitation on the porous structure of the base material. For example, as will be described later, the porous structure can be obtained by fabricating a formed body containing the fluorine resin, the thermally-conductive filler, and a volatile material (molding aid), and then by removing the volatile material.

The heat dissipating member of the present invention is intended for use in an oil environment. Taking advantage of the fact that an oil is present in the usage environment, the heat dissipating member of the present invention includes an oil retained in the pores of the porous base material. The air in the pores of the porous base material is replaced by the oil, with the result that heat dissipation properties better than those of the porous base material itself can be obtained.

Any oil that has a higher thermal conductivity than air can be used without particular limitation. An oil that is the same as or similar to the oil present in the usage environment is preferably used. For example, in the case of use in a vehicle motor, an oil usable as a lubricating oil can be suitably used. Specifically, at least one selected from the group consisting of ATFs, engine oils, universal oils, gear oils, hydrostatic transmission oils, and silicone oils, is suitably used. When an air-permeable member containing such an oil is used in a vehicle motor, the oil contained in the air-permeable member makes it possible to avoid a situation where lubrication of the vehicle motor is hindered. Among the oils mentioned above, ATFs and engine oils are particularly preferable since these oils have high cooling capability in themselves.

The oil is contained in an amount of preferably 1% by mass or more, more preferably 1 to 80% by mass, even more preferably 5 to 80% by mass, relative to the total mass of the heat dissipating member.

The shape of the heat dissipating member of the present invention is not particularly limited. In view of high handleability, the heat dissipating member preferably has a sheet shape. In this case, the thickness of the heat dissipating member of the present invention is, for example, 0.05 mm to 3 mm, and preferably 0.1 mm to 1 mm.

Next, a method for producing the heat dissipating member of the present invention will be described. The heat dissipating member of the present invention is suitably produced by a method including the steps of: (1) stacking and rolling together a plurality of sheet-shaped formed bodies each containing a PTFE-containing fluorine resin, a thermally-conductive filler, and a molding aid, so as to obtain a rolled laminated sheet; (2) removing the molding aid from the obtained rolled laminated sheet to obtain a porous base material; and (3) impregnating the obtained porous base material with an oil.

The plurality of sheet-shaped formed bodies used in the step (1), which include a PTFE-containing fluorine resin, a thermally-conductive filler, and a molding aid, can each be obtained as follows: a mixture in the form of a paste is first prepared by mixing the PTFE-containing fluorine resin, the thermally-conductive filler, and the molding aid; and the mixture is formed into a sheet.

The PTFE-containing fluorine resin, the thermally-conductive filler, and the molding aid are desirably mixed under such conditions that fibrillization of PTFE is suppressed as much as possible. Specifically, mixing is desirably performed without kneading, in a short time, by a mixing apparatus whose rotational speed is set low so as not to apply shear force to PTFE. If the fibrillizaiton of PTFE occurs at the time of mixing of the materials, there is a risk that the previously-formed fibers of PTFE are cut during rolling, and the network structure of PTFE is broken. This may lead to difficulty in maintaining a sheet shape.

For example, a saturated hydrocarbon such as dodecane and decane can be used as the molding aid. The molding aid may be added in an amount of 20 to 55% by mass relative to the total mass of the mixture.

The sheet-shaped formed body can be obtained by forming the mixture of the above materials into a sheet by extrusion molding, roll forming, or the like. The thickness of the sheet-shaped formed body is, for example, 0.5 to 5 mm. A plurality of such sheet-shaped formed bodies are prepared.

Subsequently, the plurality of sheet-shaped formed bodies are stacked (laminated) and rolled together to obtain a rolled laminated sheet. The number of the sheet-shaped formed bodies used only needs to be two or more, and is not particularly limited. The number of the sheet-shaped formed bodies may be determined as appropriate in consideration of the number of sheet-shaped formed body layers constituting the finally-obtained rolled laminated sheet serving as the porous base material. For example, the number of the sheet-shaped formed bodies is about 2 to 10. As described above, the production method includes rolling a laminated body. The lamination and rolling improve the sheet strength, and also allow the thermally-conductive filler to be firmly fixed in the fluorine resin matrix. Therefore, a sheet containing a high proportion of the thermally-conductive filler and having flexibility can be fabricated.

In the production method, the step (1) is preferably followed by an additional step (1') of stacking and rolling together a plurality of rolled laminated sheets constituted by the sheet-shaped formed bodies, or stacking and rolling together at least one rolled laminated sheet constituted by the sheet-shaped formed bodies and at least one sheet-shaped formed body containing the fluorine resin, the thermally-conductive filler, and the molding aid. The step (1') is preferably repeated. In early rolling processes (where the number of the sheet-shaped formed body layers included is small), the sheet has a low strength, and thus has difficulty in withstanding rolling performed at a high ratio. As the lamination and rolling are repeated, the rolling ratio increases, the sheet strength becomes higher, and the thermally-conductive filler becomes more firmly fixed in the fluorine resin matrix. In order to achieve high strength, the sheet-shaped formed bodies and the rolled laminated sheets constituted by the sheet-shaped formed bodies, are desirably rolled two by two.

Examples of embodiments of the step (1) and the step (1') will be described below. First, a plurality of (e.g., 2 to 10) sheet-shaped formed bodies are prepared. Next, the plurality of sheet-shaped formed bodies are laminated, and the laminated body is rolled to obtain a rolled laminated sheet (first rolled laminated sheet) (step (1)). A plurality of (e.g., 2 to 10) first rolled laminated sheets obtained as above are prepared and laminated, and the laminated body is rolled to obtain a rolled laminated sheet (second rolled laminated sheet) (step (1')). A plurality of (e.g., 2 to 10) second rolled laminated sheets obtained as above are prepared and laminated, and the laminated body is rolled to obtain a rolled laminated sheet (third rolled laminated sheet) (repetition of step (1')). Furthermore, a plurality of third rolled laminated sheets are prepared, and are laminated and rolled in the same manner. The step (1') is repeated until the number of sheet-shaped formed body layers reaches the number of constituent layers included in a rolled laminated material serving as the intended porous base material. In this embodiment, rolled laminated sheets (e.g., the first rolled laminated sheets or the second rolled laminated sheets) having the same number of the laminated sheet-shaped formed bodies are stacked and rolled together. In the step (1') of another embodiment, rolled laminated sheets having different numbers of the laminated sheet-shaped formed bodies are stacked and rolled together. In the step (1') of still another embodiment, the rolled laminated sheet and the sheet-shaped formed body are stacked and rolled together.

When performing the step (1'), it is preferable to change the rolling direction. At this time, the rolling direction in the step (1) and the rolling direction in the step (1') are preferably orthogonal to each other. Furthermore, in repetition of the step (1'), the rolling direction is preferably changed (changed by 90° in particular). By performing rolling with changing direction in this manner, the network of PTFE is stretched longitudinally and laterally. Consequently, the sheet strength can further be improved, and the thermally-conductive filler can more firmly be fixed in the fluorine resin matrix.

When the number of constituent layers of the finally-obtained rolled laminated sheet serving as the porous base material is represented by the number of the sheet-shaped formed body layers included in the rolled laminated sheet, the number of constituent layers can be, for example, 2 to 5000. In order for the sheet strength to be improved, the number of constituent layers is preferably 200 or more. On the other hand, in order for a thin sheet (e.g., a sheet having a thickness of 1 mm or less) to be formed, the number of constituent layers is preferably 1500 or less. The more the number of constituent layers is, the higher the strength of the resultant sheet is, but the higher the possibility of interfacial delamination is.

In the manner as described above, a rolled laminated sheet that preferably has a thickness of about 0.05 mm to 3 mm is finally obtained.

The step (2) can be carried out by a commonly-known method depending on the molding aid used. For example, the sheet obtained by rolling may be heated, and the molding aid may thus be removed by drying. As a result, the porous base material is obtained.

The step (3) can be performed, for example, by immersing the porous base material in an oil. The step (3) is preferably performed by immersing the porous base material in an oil after removing air from the pores of the porous base material, and then by pressurizing the oil. This is because the porous base material can easily be impregnated with the oil at a high impregnation ratio in a short time. Such a process can be performed using a vacuum and high-pressure impregnation system.

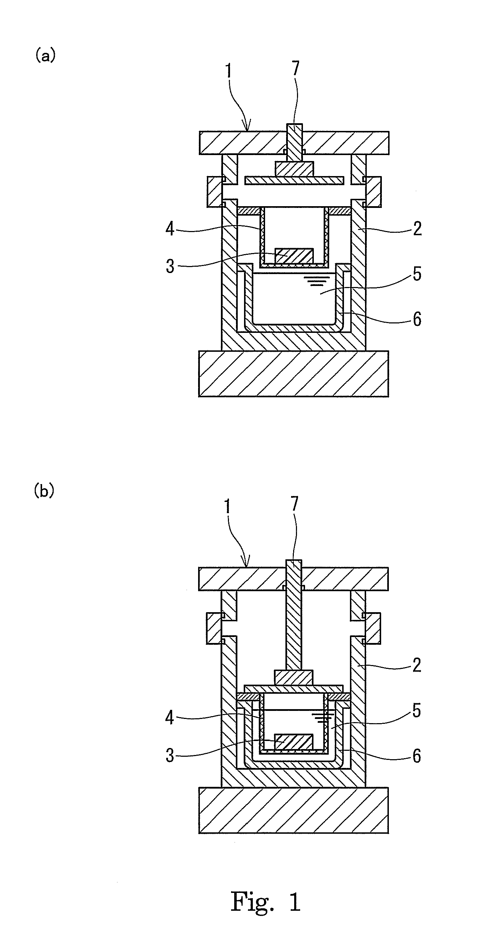

Fig. 1 shows an example where impregnation is performed using a vacuum and high-pressure impregnation system. A vacuum and high-pressure impregnation system 1 has a pressure-resistant chamber 2, a sample cage 4, a container 6, and an elevator unit 7 (Fig. 1 (a)). First, a porous base material 3 is put in the sample cage 4, and an oil 5 is put in the container 6, followed by depressurizing the vacuum and high-pressure impregnation system 1. As a result of the depressurization, the air in the pressure-resistant chamber 2 is removed, and the air in the pores of the porous base material 3 is removed. Subsequently, the elevator unit 7 is moved downward to place the sample cage 4 in the container 6, and the porous base material 3 is immersed in the oil 5 (Fig. 1(b)). After the immersion, a compressed air is introduced into the vacuum and high-pressure impregnation system 1 to pressurize the inside of the pressure-resistant chamber 2. The oil is thus pressurized, and impregnation of the oil 5 into the porous base material 3 is prompted. Thereafter, the elevator unit 7 is moved upward, and the porous base material 3 impregnated with the oil 5 is taken from the sample cage 4.

A step (4) of subjecting the porous base material to pressure molding may further be carried out between the step (2) and the step (3). The porosity of the porous base material after the step (2) is generally about 50 to 80%. However, by carrying out the step (4), the porosity of the porous base material is reduced to 40% or less, and the particles of the thermally-conductive filler become densely distributed, which can result in further reduction in the thermal resistance of the heat dissipating member.

The pressure molding can be performed, for example, by pressing the porous base material at a temperature of 320 to 400°C at a pressure of 0.05 to 50 MPa for 1 to 15 minutes.

In the manner as described above, the heat dissipating member of the present invention can be obtained. However, the method for producing the heat dissipating member of the present invention is not limited to the above method.

The heat dissipating member of the present invention has excellent heat dissipation properties. For example, a thermal resistance value of 25 $cm^2 \cdot K/W$ or less can be achieved. By adjusting the type and content of the thermally-conductive filler, it is possible to achieve a thermal resistance value of 5 $cm^2 \cdot K/W$ or less, or even a thermal resistance value of 1 $cm^2 \cdot K/W$ or less.

Since a fluorine resin having high oil resistance and an oil are used in the heat dissipating member of the present invention, the heat dissipating member is suitable for use in an oil environment. Therefore, the heat dissipating member is best suited as a heat dissipating member for a motor in a vehicle (e.g., a hybrid automobile, an electric automobile etc.). The use of the heat dissipating member makes it possible to cool a vehicle motor with high efficiency for a long period of time. In the case of use as a heat dissipating member for a vehicle motor, an air layer in the vehicle motor may be replaced by the heat dissipating member of the present invention. For example, in the case where an air layer is present between a stator and a casing, between a stator and a coil, between a casing and a coil, or between a stator and another stator, the heat dissipating member of the present invention may be held between the components. The mode of use in a vehicle motor is not limited thereto. In addition, it should be understood that the heat dissipating member of the present invention can be used for devices (e.g., generators, electronic devices etc.) other than vehicle motors.

The heat dissipating member of the present invention contains an oil. Therefore, the heat dissipating member is preferably packaged in a pack with an oxygen barrier film when put into storage and when put on the market. As the oxygen barrier film, a commonly-known oxygen barrier film can be used, and an oxygen barrier film having resistance against the oil contained in the heat dissipating member may be selected as appropriate.

EXAMPLES

Hereinafter, the present invention will be described in detail with reference to Examples and Comparative Examples. However, the present invention is not limited to these Examples.

Example 1

A boron nitride powder (product code "HP-40" manufactured by MIZUSHIMA FERROALLOY CO., LTD.), a PTFE powder (product code "F104U" manufactured by DAIKIN INDUSTRIES, LTD.), and a PFA powder (product code "MP-10" manufactured by Du Pont-Mitsui Fluorochemicals Company, Ltd.) were mixed at a mass ratio of 80:10:10. An amount of 60 parts by mass of decane was further added to 100 parts by mass of the mixture, followed by mixing, to obtain a mixture in the form of a paste. The mixing of the materials was performed using a V-type mixer at a rotational speed of 10 rpm at a temperature of about 25°C for 1 minute.

The thus obtained mixture in the form of a paste was rolled with a pressure roll to obtain two sheet-shaped formed bodies having a thickness of 3 mm. Next, the two sheet-shaped formed bodies were stacked and rolled to form a first laminated sheet having two laminated layers. Next, the first laminated sheet was cut into two pieces, and the two pieces were stacked and rolled together to form a second laminated sheet having four laminated layers. This series of steps of cutting, stacking, and rolling was repeated five times while changing the rolling direction by 90° for every rolling step. The resultant laminated sheet was rolled several times to form a rolled laminated sheet having a thickness of about 0.5 mm.

Next, the obtained rolled laminated sheet was heated at 150°C for 20 minutes to remove the molding aid. Thus, a sheet-shaped porous base material was obtained.

An ATF (Toyota genuine auto fluid WS 08886-02305) was put into a container of a vacuum and high-pressure impregnation system (manufactured by MIKADO TECHNOS CO., LTD.) which is of a type shown in Fig. 1, and the sheet-shaped porous base material having the size of 50 mm $\times$ 50 mm was set in a sample cage. The pressure inside the vacuum and high-pressure impregnation system was reduced to about 0.0073 MPa, and the reduced pressure was maintained for 5 minutes. Thereafter, the sheet-shaped porous base material was immersed in the ATF. A compressed air was introduced into the vacuum and high-pressure impregnation system to increase the pressure up to 2.9 MPa, and the increased pressure was maintained for 5 minutes. The sheet-shaped porous base material was thus impregnated with the ATF, and a heat dissipating member was obtained. The thickness of the heat dissipating member was 0.5 mm, and the oil content was 42% by mass relative to the total mass of the heat dissipating member.

Example 2

A heat dissipating member of Example 2 was obtained in the same manner as in Example 1, except that the impregnation process was performed after a sheet-shaped porous base material obtained in the same manner as in Example 1 was pressed at a temperature of 380°C at a pressure of 5 MPa for 5 minutes. The thickness of the heat dissipating member of Example 2 was 0.25 mm, and the oil content was 16% by mass relative to the total mass of the heat dissipating member.

Example 3

A heat dissipating member of Example 3 was obtained in the same manner as in Example 1, except that a carbon black powder (product code "#4500" manufactured by TOKAI CARBON CO., LTD.) was used in place of the boron nitride powder. The thickness of the heat dissipating member of Example 3 was 0.75 mm, and the oil content was 56% by mass relative to the total mass of the heat dissipating member.

Comparative Example 1

A heat dissipating member of Comparative Example 1 was obtained in the same manner as in Example 1, except that the oil impregnation process was not performed. The thickness of the heat dissipating member of Comparative Example 1 was 0.5 mm.

Comparative Example 2

A heat dissipating member of Comparative Example 2 was obtained in the same manner as in Example 2, except that the oil impregnation process was not performed. The thickness of the heat dissipating member of Comparative Example 2 was 0.25 mm.

Comparative Example 3

A heat dissipating member of Comparative Example 3 was obtained in the same manner as in Example 3, except that the oil impregnation process was not performed. The thickness of the heat dissipating member of Comparative Example 3 was 0.75 mm.

Thermal resistances and breakdown voltages were measured by the methods described below for the heat dissipating members of Examples and Comparative Examples fabricated as described above. The results of the measurements are shown in Table 1.

(Thermal resistance)

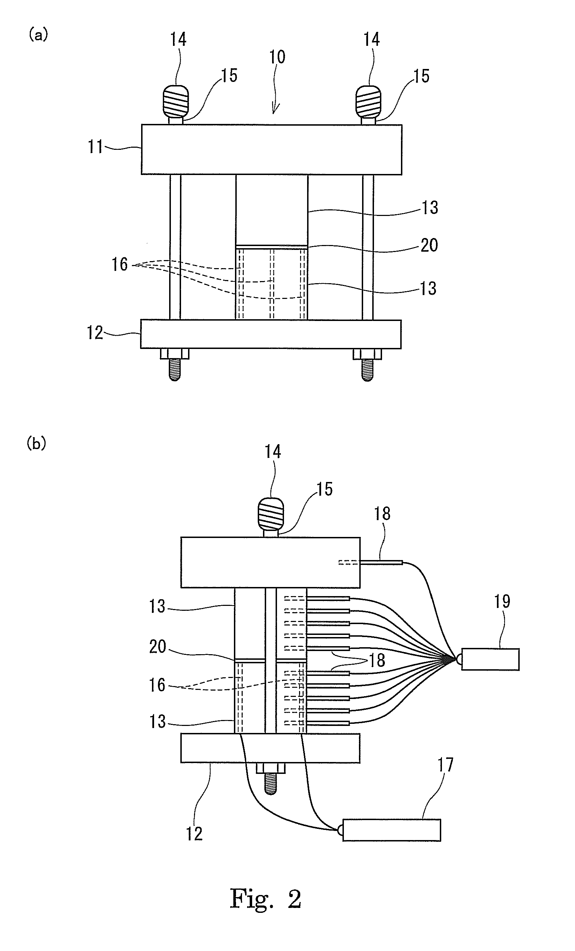

The thermal resistances were measured using a thermal characterization system 10 shown in Fig. 2. The thermal characterization system has a heat generator (heater block) 11 in an upper portion thereof, and has a heat dissipator (cooling base plate configured to allow cooling water to circulate therein) 12 in a lower portion thereof. The heat generator 11 and the heat dissipator 12 each have a rod 13 made of aluminum (A5052, thermal conductivity: 140 W/m · K) and formed in the shape of a cube 20 mm on a side. Pressure adjustment screws 14 paired with each other and penetrating the heat generator 11 and the heat dissipator 12 are provided lateral to the pair of rods 13. Load cells 15 are provided between the pressure adjustment screws 14 and the heat generator 11, and function to measure pressures when the pressure adjustment screws 14 are tightened. Three probes 16 (diameter: 1 mm) of a contact-type displacement meter 17 are installed inside the rod 13 of the heat dissipator 12. When no sample (heat dissipating member) is placed between the rods 13, the upper ends of the probes 16 are in contact with the bottom surface of the rod 13 on the upper side (of the heat generator 11). The probes 16 are configured to measure the distance between the upper and lower rods 13 (the thickness of a sample). Temperature sensors 18 of a thermometer 19 are attached to the back surfaces of the heat generator 11 and the upper and lower rods 13. Specifically, one temperature sensor 18 is attached to the heat generator 11, and five temperature sensors 18 are attached to each rod 13 in such a way that the five temperature sensors 18 are arranged at regular intervals in the vertical direction.

In the measurement, first, a heat dissipating member 20 (20 mm × 20 mm) of each of Examples and Comparative Examples was sandwiched from above and below by the pair of rods 13. The pressure adjustment screws 14 were tightened to apply a pressure to the heat dissipating member 20, the temperature of the heat generator 11 was set to 150°C, and cooling water of 20°C was circulated in the heat dissipator 12. After the temperatures of the heat generator 11 and the upper and lower rods 13 stabilized, the temperatures of the upper and lower rods 13 were measured by the temperature sensors 18. From the thermal conductivities ((W/m · K) of, and the temperature gradient between, the upper and lower rods 13, the heat flux flowing through the heat dissipating member 20 was calculated, and the temperatures of the interfaces between the heat dissipating member 20 and the upper and lower rods 13 were also calculated. Using these calculated values, the thermal resistance ($cm^2 \cdot$ K/W) at the applied pressure was calculated by a heat conduction equation (Fourier's law). Thermal resistances were determined for the cases where the pressure applied to the heat dissipating member 20 was 125 kPa, 250 kPa, and 500 kPa.

$$Q = -\lambda \mathrm{grad} T$$

$$R = L/\lambda$$

Q: Heat flux per unit area
gradT: Temperature gradient
L: Thickness of sample (heat dissipating member)
$\lambda$: Thermal conductivity
R: Thermal resistance

(Breakdown voltage: B.D.V)

The breakdown voltages were determined in accordance with JIS K 6245.

[Table 1]

| | Thickness: mm | Thermal resistance: ($cm^2 \cdot$ K)/W | | | B.D.V: kV |
|---|---|---|---|---|---|
| | | 125 kPa | 250 kPa | 500 kPa | |
| Example 1 | 0.5 | 3.8 | 3.1 | 2.5 | 14.8 |
| Example 2 | 0.25 | 1.0 | 1.0 | 0.9 | 7.0 |
| Example 3 | 0.75 | 22.3 | 20.0 | 18.0 | - |
| Com. Example 1 | 0.5 | 12.4 | 10.4 | 7.0 | 9.3 |
| Com. Example 2 | 0.25 | 1.6 | 1.6 | 1.4 | 3.3 |
| Com. Example 3 | 0.75 | 91.8 | 99.5 | 79.2 | - |

It is understood from the above results that the heat dissipating member of the present invention has excellent heat dissipation properties. It is also understood that good insulating properties are provided when an insulating filler is used as the thermally-conductive filler.

INDUSTRIAL APPLICABILITY

The heat dissipating member of the present invention is suitable for use in an oil environment, and is extremely useful, for example, as a heat dissipating member for a vehicle motor.

**Claims**

1.  A heat dissipating member comprising:

     a porous base material containing a fluorine resin and a thermally-conductive filler; and
     an oil contained in pores of the porous base material, wherein
     the fluorine resin contains polytetrafluoroethylene.

2.  The heat dissipating member according to claim 1, wherein the fluorine resin further contains at least one selected from the group consisting of perfluoroalkoxy resins and tetrafluoroethylene-hexafluoropropylene copolymers.

3.  The heat dissipating member according to claim 1, containing the oil in an amount of 1% by mass or more.

4.  The heat dissipating member according to claim 1, wherein the oil is at least one selected from the group consisting of automatic transmission fluids, engine oils, universal oils, gear oils, hydrostatic transmission oils, and silicone oils.

5.  The heat dissipating member according to claim 1, wherein the thermally-conductive filler is at least one insulating filler selected from the group consisting of boron nitride, aluminum nitride, alumina, silicon nitride, and magnesium oxide.

6.  The heat dissipating member according to claim 1, wherein the thermally-conductive filler is at least one electrically-conductive filler selected from the group consisting of graphite, carbon black, carbon fibers, metal fibers, and metal particles.

7.  The heat dissipating member according to claim 1, packaged in a pack with an oxygen barrier film.

8.  A method for cooling a vehicle motor, comprising using the heat dissipating member according to claim 1.

9.  A method for producing a heat dissipating member, comprising the steps of:

     (1) stacking and rolling together a plurality of sheet-shaped formed bodies each containing a polytetrafluoroethylene-containing fluorine resin, a thermally-conductive filler, and a molding aid, so as to obtain a rolled laminated sheet;
     (2) removing the molding aid from the obtained rolled laminated sheet to obtain a porous base material; and
     (3) impregnating the obtained porous base material with an oil.

10. The method for producing a heat dissipating member according to claim 9, further comprising a step (4) of subjecting the porous base material to pressure molding between the step (2) and the step (3).

11. The method for producing a heat dissipating member according to claim 9, wherein the step (3) is performed by immersing the porous base material in an oil after removing air from pores of the porous base material, and then by pressurizing the oil.

(a)

(b)

Fig. 1

(a)

(b)

Fig. 2

<table>
<tr><td colspan="2" align="center">**INTERNATIONAL SEARCH REPORT**</td><td>International application No.</td></tr>
<tr><td colspan="2"></td><td>PCT/JP2011/005891</td></tr>
</table>

A.   CLASSIFICATION OF SUBJECT MATTER
*C08L27/18*(2006.01)i, *B29C67/00*(2006.01)i, *C08J9/26*(2006.01)i, *C08J9/40*
(2006.01)i, *C08K3/00*(2006.01)i, *H02K9/19*(2006.01)i

According to International Patent Classification (IPC) or to both national classification and IPC

B.   FIELDS SEARCHED

Minimum documentation searched (classification system followed by classification symbols)
C08L27/18, B29C67/00, C08J9/26, C08J9/40, C08K3/00, H02K9/19

Documentation searched other than minimum documentation to the extent that such documents are included in the fields searched
Jitsuyo Shinan Koho          1922-1996   Jitsuyo Shinan Toroku Koho    1996-2011
Kokai Jitsuyo Shinan Koho    1971-2011   Toroku Jitsuyo Shinan Koho    1994-2011

Electronic data base consulted during the international search (name of data base and, where practicable, search terms used)
CA/REGISTRY(STN)

C.   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 8-509324 A  (W.L. Gore & Associates, Inc.),<br>01 October 1996 (01.10.1996),<br>claims; page 10, lines 12 to 16; page 12, lines<br>9 to 20; examples<br>& US 5545473 A          & EP 694212 A1<br>& WO 1995/022175 A1     & DE 69428530 T2<br>& AU 7199794 A          & CA 2153501 A1<br>& CN 1117770 A | 1,3-6<br>2<br>7,8 |
| Y | JP 2010-137562 A  (Nitto Denko Corp.),<br>24 June 2010 (24.06.2010),<br>claims; paragraph [0085]<br>& WO 2010/055878 A1 | 2 |

☒   Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 December, 2011 (26.12.11) | 10 January, 2012 (10.01.12) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
|---|
| PCT/JP2011/005891 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 8-269221 A (Nitto Denko Corp.),<br>15 October 1996 (15.10.1996),<br>claims; examples<br>(Family: none) | 1-8 |
| A | JP 6-179769 A (Nitto Denko Corp.),<br>28 June 1994 (28.06.1994),<br>claims; examples<br>(Family: none) | 1-8 |
| A | JP 7-500432 A (Checkpoint Systems, Inc.),<br>12 January 1995 (12.01.1995),<br>claims<br>& US 5241299 A            & EP 587696 A1<br>& WO 1992/021113 A1      & DE 69230559 T2<br>& FI 935118 A            & CA 2103355 A1<br>& AT 188795 T            & AU 655645 B2<br>& MX 9202424 A           & ES 2144415 T3<br>& DK 587696 T3           & IE 921635 A1<br>& AR 246630 A1 | 1-8 |
| A | JP 3-148472 A (Mitsubishi Gas Chemical Co., Inc.),<br>25 June 1991 (25.06.1991),<br>claims; examples<br>& US 5415907 A           & US 5510166 A<br>& EP 424855 A1           & DE 69008474 T2<br>& SG 9590717 A           & CA 2027534 A1 | 1-8 |

Form PCT/ISA/210 (continuation of second sheet) (July 2009)

<table>
<tr><td>**INTERNATIONAL SEARCH REPORT**</td><td>International application No.<br>PCT/JP2011/005891</td></tr>
</table>

**Box No. II       Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III       Observations where unity of invention is lacking (Continuation of item 3 of first sheet)**

This International Searching Authority found multiple inventions in this international application, as follows:
    See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☒ As only some of the required additional search fees were timely paid by the applicant, this international search report covers only those claims for which fees were paid, specifically claims Nos.:
    Claims 1-8

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2011/005891 |

Continuation of Box No.III of continuation of first sheet(2)

The "heat sink member" set forth in claim 1 of the present application is disclosed in document 1 shown below and is not considered to be novel. Claim 1 hence has no special technical feature.

Document 1: JP 8-509324 A (W.L. Gore & Associates, Inc.), 01 October 1996 (01.10.1996); claims; page 10, lines 12-16; page 12, lines 9-20; examples & US 5545473 A & EP 694212 A1 & WO 1995/022175 A1 & DE 69428530 T2 & AU 7199794 A & CA 2153501 A1 & CN 1117770 A

Therefore, the inventions set forth in claims 1-11 are not considered to have a special technical feature common thereamong. These inventions hence are not considered to be so linked as to form a single general inventive concept.

The inventions set forth in claims 1-11 are considered to involve four inventions, in each of which the claimed inventions are correlated with one another by the technical feature shown below.

Incidentally, the inventions set forth in claims 1-6, which have no special technical feature, are classified in (invention 1).

(Invention 1) The inventions set forth in claims 1-6

An invention relating to a heat sink member "which comprises a porous base material comprising a fluororesin and a thermally conductive filler and an oil confined in the pores of the porous base material, the fluororesin comprising polytetrafluoroethylene".

(Invention 2) The invention set forth in claim 7

An invention relating to the heat sink member "which has been packaged with an oxygen-barrier film".

(Invention 3) The invention set forth in claim 8

An invention relating to "a method for cooling a vehicle motor, characterized by using the heat sink member of claim 1".

(Invention 4) The inventions set forth in claims 9-11

An invention relating to "a process for producing a heat sink member, the process comprising ···".

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *DENSO TECHNICAL REVIEW,* 2008, vol. 13 (1